(19) Europäisches Patentamt
European Patent Office
Office européen des brevets

(11) **EP 3 070 444 B1**

(12) **EUROPEAN PATENT SPECIFICATION**

(45) Date of publication and mention
of the grant of the patent:
**12.12.2018 Bulletin 2018/50**

(51) Int Cl.:
**G01K 1/14** *(2006.01)*          **G01K 1/16** *(2006.01)*
**G01K 13/02** *(2006.01)*

(21) Application number: **15159391.0**

(22) Date of filing: **17.03.2015**

(54) **A SURFACE TEMPERATURE MEASURING DEVICE**

OBERFLÄCHENTEMPERATURMESSFÜHLER

DISPOSITIF DE MESURE DE TEMPÉRATURE DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2016 Bulletin 2016/38**

(73) Proprietor: **ENDRESS + HAUSER WETZER GmbH
+ Co. KG
87484 Nesselwang (DE)**

(72) Inventor: **Del Bianco, Massimo
20900 Monza (IT)**

(74) Representative: **Andres, Angelika Maria
Endress+Hauser (Deutschland) AG+Co. KG
PatServe
Colmarer Strasse 6
79576 Weil am Rhein (DE)**

(56) References cited:
**EP-A2- 2 151 673          CN-U- 203 758 647
DE-A1-102012 108 388     US-A- 4 527 908**

## Description

The invention relates to a surface temperature measuring device and to a method for measuring a surface temperature.

Every temperature measuring process involves the transfer of heat from the measured body, as the surface of a container or the process medium therein, to the measuring device and to the environment.

Most temperature measuring devices utilizing convection or conduction require the temperature measuring sensor to come into thermal equilibrium with the body being measured. When the body being measured is a poor heat conductor, the time to reach equilibrium (with the temperature measuring sensor) may be considerable. This measuring waiting time to reach equilibrium is a thermodynamic necessity. Additionally the heat transfer from the ambient environment to the sensor will interfere.

Thus, when the thermal equilibrium is reached, due to the temperature difference between the process and the external environment, a heath transfer is always present. As consequence of the heat transfer, the external surface temperature of the container wall cannot be the same of the process temperature. It means that this kind of measure is always affected by an error and the magnitude of the error depends on the system characteristics itself as the boundary condition into the process and at the outer environment and the thermal conductivity of the container and the sensor elements.

An apparatus for sensing the temperature of a fluid being drawn from a well has become known from US patent application US 2002/0064206 A1. The apparatus disclosed therein includes a sensor mounted on the outer surface of the pipe wall, an insulator, and a housing attached to the pipe that encloses the sensor and the insulator. The thermal conductivity of the pipe wall is greater than that of the insulator.

A clinical temperature measuring device has also become known from German patent application DE1573324. Therein it is suggested to make use of a conductor having a positive temperature coefficient for pre-heating the temperature measuring device.

From US patent US 3321974 a surface temperature measuring device has become known, comprising: temperature sensing means including a part contactable with a surface the true temperature of which is to be measured and arranged to generate a measurable signal responsive to the temperature sensed; and means, including thermocouple means and heater means both in conductive heat exchange relation with each other through direct contacting solid bodies and similarly with said temperature sensing means, arranged to heat said temperature sensing means by thermal conduction so as to eliminate net heat flow between said temperature sensing means and said surface when the latter is contacted by said part.

From US patent US 3720103 a heat flux meter having thermocouples responsive to temperature differentials between two similar surfaces it has become known, wherein the heat flux to one of which is to be determined, a first heater responsive to the thermocouples for heating the other surface, a second heater responsive to temperature differences between it and the first heater to prevent heat flow away from the other surface and a reflective shield for preventing environmental heat flow to the other surface.

Further on patent application WO 98/50766 discloses a high speed accurate temperature measuring device especially useful for measuring human body temperature, comprising an elongated temperature probe for insertion into a body cavity and said probe has a rounded insertion tip, a first temperature sensor located beneath the surface of the probe near the insertion tip, at least one second temperature sensor located within the probe and parallel to the first sensor, a thermal insulation member located between the first sensor and the second sensor, a data processing unit connected to the first and second temperature sensors calculating the body temperature according to heat flux measured between the body and the first sensor and between the first sensor and the second sensor, and a data display connected to said data processing unit.

German patent application DE3230124 suggests making use of an auxiliary energy supply in order to heat the temperature sensor.

From US patent US 4968151 an apparatus for measuring the temperature of a fluid flowing in a duct has become known, the duct having a wall of relatively low thermal conductivity, the apparatus comprising an annular ceramic body having an inner face arranged to fit around the duct wall in relatively good thermal contact therewith, the body defining a first chamber and a second chamber, the first chamber being remote from the inner face and the second chamber being near to the inner face, a first temperature sensor locatable in the first chamber and a second temperature sensor locatable in the second chamber, means for heating the body at the circumferential periphery thereof, and means for monitoring the outputs of the sensors, whereby in operation the temperature may be recorded at which the temperatures sensed by the sensors at the first chamber and at the second chamber are substantially identical.

German patent application DE 3527942 discloses a method for measuring the core body temperature of biological objects to be measured by performing the measurement on the skin surface by means of an electronic thermometer equipped with a temperature sensor in a housing and a separate electrostatic evaluation circuit, characterized in that in the housing a heating element is provided, which heats up during the measurement, in that furthermore in the housing a measurement of the temperature gradient between the heating element and the measurement object is performed and that finally the measurement of the core body temperature performed at a zero heat flow between heating element and the measurement object.

The measuring inserts e.g. per DIN 43735 are commonly used in industrial plants. These offer a high degree of flexibility thanks to modular design with standard terminal heads as per DIN EN 50446 and customer-specific immersion lengths. Such a thermometer may thus be equipped either with resistance (RTD) or with thermocouple (TC) measuring insert. Also, these inserts are only used for in application in which the insert is either directly immersed in the process medium or is inserted in a protective sheath which itself is immersed in the process medium.

Other apparatuses for measuring the temperature of a fluid flowing in a pipe are known from CN 203 758 647 U, US 4, 527 908 A and EP 2 151 673 A2.

None of the measurement devices known from the state of the art are easily replaceable. Although, especially in case of a failure of the primary temperature sensor or in case a calibration or the like is necessary the primary sensor has to replaced or removed.

Hence the object of the present invention is to provide an improved surface temperature measurement which minimizes heat flow from the surface contacted and thereby permits temperature of the process medium and/or of the surface to be determined and provides easier maintenance.

The object is achieved by way of a surface measuring device and a method for measuring the surface temperature.

Regarding the surface measuring device, the object is achieved by way of a surface temperature measuring device comprising: a housing having a first section, preferably at one of its respective ends, for fastening the housing to a container wall, e.g. a pipe, said housing having a second section with a first layer acting as a thermally insulating layer, and forming a closed cavity when said housing is attached to said container wall, the closed cavity being filled with a gas or a solid,

and a passage in said second section for inserting a rod shaped measuring insert in said cavity, wherein

said second section (b) of said housing comprises a first annular member (5) being, preferably radially, displaced from said container wall (3) when attached to said container wall (3), said first annular member (5) being a thermally conductive second layer, and

said first annular member (5) is circumferentially surrounded by a heating element (20).

The fastening may occur by way of a marman-clamp which allows two cylindrical interfaces, e.g. connected through a hinge, to be simply clamped together with a ring clamp. Also, a hose clamp may be used to fasten the housing to the container wall. Thus a clamp may be part of the housing and may form a first section thereof. The housing may therefore comprise an upper and a lower half which may be connected to each other to form said housing.

Said closed cavity may be a recess in the second housing part. This recess then forms the closed cavity when said second housing part is attached to the container wall. The container wall thus forms a closure confining the closed cavity. The closed cavity is then surrounded by the walls of the recess of the second housing part and the container wall the device is attached to. The cavity is thus tightly attached to the container wall.

The first housing part however may be in direct contact, i.e. in physical contact, with a bearing surface of the container wall.

The passage in the second housing part may be an opening through which the measuring insert is insertable. The passage thus connects the environment with the cavity. However, in an embodiment the cavity may be connected to another housing part through said passage. The passage may also be sealed in a tight manner, e.g. when said measuring insert is inserted in the passage, e.g. a gasket may be employed for this purpose.

The housing may comprise a third section which also serves for fastening said housing to said container wall. The second section can thus be arranged between said first and said third section.

Preferably the first and the second section, and the third section, as the case may be, are arranged directly adjacent to one another along the longitudinal axis of the housing. However, the first, second and third section may be arranged adjacent to each other in the transversal plane, e.g. the first section may be a hinge and the third section may be a clamp - or vice versa.

The annular member may be a sheet metal or casted preformed body.

The heating element may be a heating foil which is attached to the outer surface of the annular member. This heating foil may be in direct contact with the annular member.

In an embodiment of the surface temperature measuring device said closed cavity circumferentially surrounds said container wall when attached to said container wall. In a cross-sectional view the cavity may thus form an annulus. The inner ring of the annulus may thus be the container wall, e.g. a pipe, and the outer ring may be a housing wall of the second housing section.

In another embodiment of the surface temperature measuring device said second section is delimited by a first side wall and a second side wall at its diametral ends. These walls are part of the housing, e.g. part of the first, second or third housing section.

In another embodiment of the surface temperature measuring device said second section extends between a first and a second shoulder (forming said side walls) of said housing and wherein said cavity is arranged between said first and second shoulder. Thus, the second section of the housing may be of cylindrical shape.

In another embodiment of the surface temperature measuring device said first and said third section are in physical contact with the (outer surface of the) container wall.

In another embodiment of the surface temperature measuring device said passage is configured to receive said rod shaped measuring insert and to arrange the insert in an angle perpendicular to the longitudinal axis of said container wall, preferably perpendicular to the longitudinal axis of the pipe in case said container is a pipe.

In another embodiment of the surface temperature measuring device said annular member is connected at its respective ends to said first and second shoulder. This may be achieved by welding the annular member to the annular member to said shoulders. However, it is possible to have a monolithic housing possessing a first and second should and an annular member between these shoulder. Such a housing or parts thereof may be made by casting.

In another embodiment of the surface temperature measuring device wherein said annular member is in thermal, and preferably in physical contact, contact with said heating element. Said heating element may also comprise a heating element which itself does only cover a part of the annular member but is coupled to a thermal conductor which covers the remaining surface of the annular member. This is the case when e.g. heating cables coiled on the annular surface are used. Thereby homogeneous heat distribution may be achieved.

In another embodiment of the surface temperature measuring device said thermally conductive layer completely covers the annular member.

In another embodiment of the surface temperature measuring device said second section is covered by an insulation layer, which serves for thermally insulating the device, especially said cavity. Thus the layer structure may comprise in an order starting from e.g. a center of the pipe and going outwards: process medium, container wall, closed cavity, second housing section wall, e.g. annular member, heating element, insulation layer.

In another embodiment of the surface temperature measuring device said measuring insert comprises a sheath in which a temperature sensor is arranged, preferably at the tip of said rod shaped insert.

In another embodiment of the surface temperature measuring device said measuring insert possesses a tip which is in thermal contact, preferably in physical contact, with said container wall.

In another embodiment of the surface temperature measuring device a thermally conductive pad is attached to the container wall and the tip of said rod shaped insert is in physical contact with said pad.

In another embodiment of the surface temperature measuring device the insert is fastened, e.g. by way of thread, to said third housing section and a pre-loaded force is exerted on said insert/pad/container wall.

In another embodiment of the surface temperature measuring device a second temperature sensor is arranged between said annular member and said heating element.

In another embodiment of the surface temperature measuring device the surface temperature measurement device comprises a processing unit for controlling said heating element and for receiving a sensor signal of said measuring insert and a sensor signal of said temperature sensor.

In another embodiment of the surface temperature measuring device said processing unit is arranged in a second housing, which is attached to said first housing. Said second housing may have an electronics compartment in which said processing unit is arranged.

In another embodiment of the surface temperature measuring device said measurement device possesses an upper and a lower half which are connectable to each other and to the container wall, in order to form said device.

Regarding the method the object is achieved by way of a method for measuring a surface temperature of a container wall according to claim 8.

In an embodiment of the method the heating element is heated to the temperature of said container wall. In which case the temperature difference between the first and the second sensor should be eliminated after a certain time, i.e. when equilibrium is reached. However the heating element may be heated to different temperatures during a heating phase in order to sooner reach an equilibrium state.

In another embodiment of the method based upon said container wall temperature, a temperature of the process medium inside said container is determined.

In another embodiment of the method the heating element is heated to a temperature higher than the temperature in the environment of said container wall - and thus the temperature gap between the process medium and the environment is reduced.

It is an advantage of the invention that heat capacity of the temperature sensing element, i.e. the insert, is small so that little heat flow and temperature distortion are involved. Another advantage is that the heat flow away from the temperature sensing element, i.e. the insert, to other parts of the device is minimized, again minimizing distortion of the surface temperature. Still another advantage is that the device suggested is small and compact in size. A further advantage is that the device suggested can be operated in various temperature ranges. To conclude, the use of a proper insulating material for the outermost layer allows also to reach two benefits, like the reduction of the power consumption necessary to stop or minimize the internal heat transfer (energy efficiency) and the reduction of the external wall temperature to improve the safety aspect.

The invention is described in further detail with regard to the following figures:

Fig. 1a shows a transversal cross-sectional view of a surface measuring device having a single temperature sensor,

Fig. 1b shows the layer-structure of a housing wall of a surface measuring device according to figure 1a and the temperature profile as a function of the radius,

Fig. 1c shows a transversal cross-sectional view of a surface measuring device having a first and a second temperature sensor,

Fig. 1d shows the layer-structure of a housing wall of a surface measuring device according to figure 1c and the temperature profile as a function of the radius,

Fig. 2a shows a longitudinal cross-sectional view of surface measuring device,

Fig. 2b shows a transversal cross-sectional view through a first housing section of the surface measuring device, and

Fig. 2c shows a transversal cross-sectional view through a second housing section of the surface measuring device.

The surface temperature measuring device 1 according to the invention is an improved version of a thermometer used to measure the surface temperature of e.g. a pipe to estimate the temperature of a process fluid 2 flowing inside a pipe or other type of container. The device 1 is especially useful when it is not possible to install a thermowell or to have the possibility to insert the measuring insert 8 directly into the process pipe. The surface temperature measuring device 1 as depicted in the figures - instead of a insert submerged in the process fluid - is naturally affected by errors due to the nature of the system itself and due to the heat transfer between the process medium 2 and the external environment 7 driven by the temperature difference Tp-Te in between them.

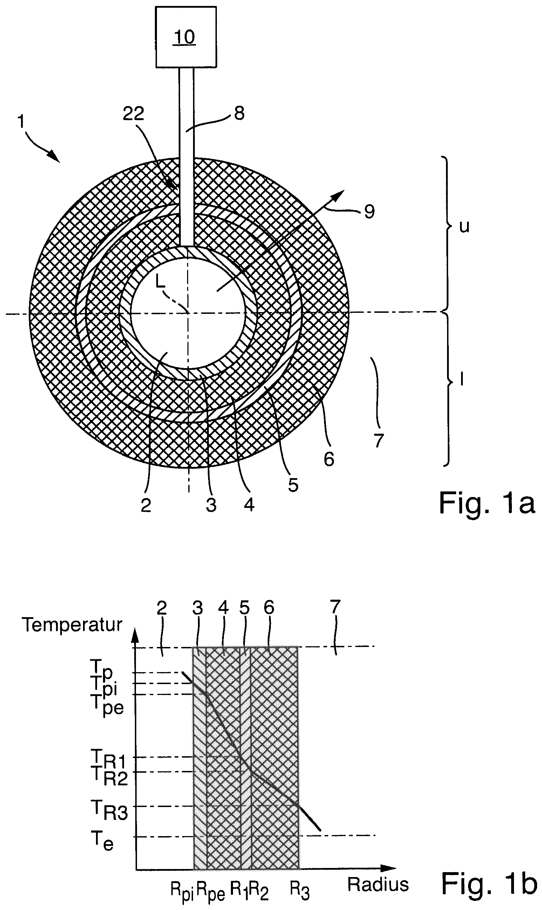

A theoretical model related to the situation as depicted in figure 1a is explained in the following.

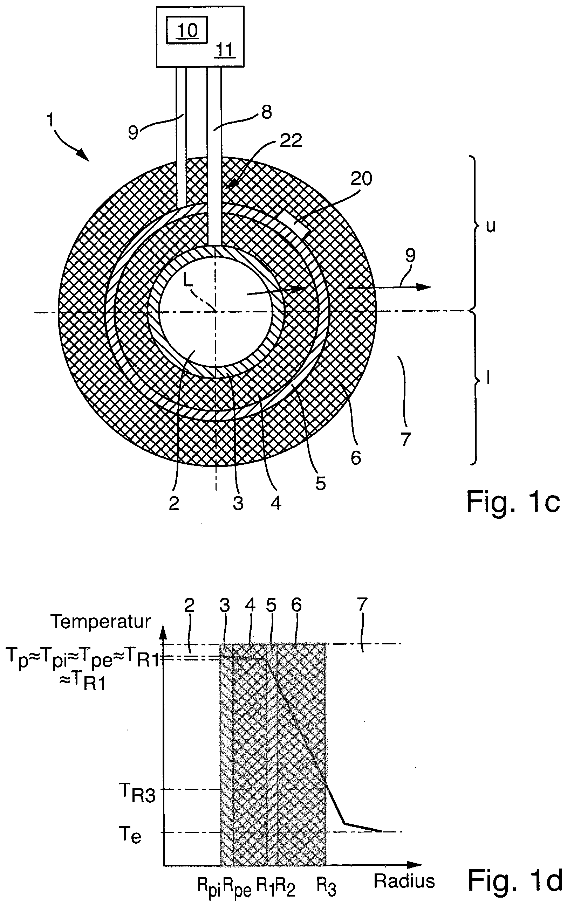

For the purpose of simplicity a model with three layers 4, 5, 6 around the pipe wall 3 is used to provide a simplified analytical description of the phenomena. The same model scheme will be presented when relating to figure 1c.

In figure 1a transverse cross-section through a wall of a housing is shown. The surface temperature measuring device 1 is attached to a pipe wall 3 through which a process fluid 2 is flowing. The pipe wall 3 confines the process fluid 2 inside the pipe. The pipe wall 3 is completely surrounded by multiple layers 4, 5, 6 formed by the housing wall of the surface temperature measuring device 1. The first layer 4 is a closed cavity formed by attaching or fastening the housing to the pipe wall 3. This cavity may be filled with a gas, preferably air, und thus acts as a thermally insulating layer. Alternatively this layer 4 may be filled with another material, e.g. a solid, providing proper thermal insulation.

The first layer 4 is surrounded by a second layer 5 made out of a thermally conductive material. Thus the thermal conductivity of the second layer 5 is higher than the thermal conductivity of the first layer 4. This second layer 5 confines the volume of the closed cavity or completely covers the first layer 4.

The second layer 5 itself is also surrounded and preferably covered by a third layer 6. This third layer 6 also serves as a thermal insulator and is made out of an appropriate material. Thus the thermal conductivity of the third layer 6 is lower than the thermal conductivity of the second layer 5. The third layer 6 is surrounded by the environment 7, e. g. the environment present in an industrial plant in which the device 1 is installed. Thus the housing wall is formed by a multi-layered structure in which the layers 4, 5, 6 circumferentially surround the pipe wall 3.

A measuring insert 8 also called probe- is inserted from the outside of said housing through the different layers 4, 5, 6 forming the wall of said housing. A passage 22 is provided through the different layers 4, 5, 6 in order to receive the rod shaped measuring insert 8. The tip of the insert 8 is in direct contact with the pipe wall 3. However, a coupling region can be provided on the surface of the pipe wall 3 for receiving the tip of the measuring insert 8 in order to reach the highest thermal contact possible between the two parts. The passage 22 extends through the first, second and third layer 4, 5, 6. Alternatively the passage 22 may be a tube extending through the layers 4, 5, 6 which serves for receiving the measuring insert.

The measuring insert 8 is thus replaceable as it may be inserted in and removed from the passage 22. The end of the measuring insert 8 vis-a-vis to the tip is connected to an electric or electronic circuit 10 -serving as a processing unit- which is configured to process a sensor signal and to determine a temperature based upon the sensor signal of a sensor arranged in said measuring insert 8. When the measuring insert 8 is inserted in the passage 22 and the tip is in contact with the surface of the pipe wall 3 a stem part of the rod shaped measuring insert fills the passage 22. The passage 22 may be sealed by gasket in the passage 22 or a gasket arranged on the stem part of the measuring insert 8.

An exemplary temperature profile across the different layers 4, 5, 6 starting from a process medium temperature Tp is shown in figure 1b. Regularly the process fluid 2 has a temperature Tp which is higher than the temperature of the environment Te. Also, due to the boundary layer of the process fluid at the inner surface of the pipe wall 3 at radius Rpi having temperature Tpi there is a temperature gradient between this boundary layer and the process fluid "core" temperature. Thus the temperature Tpi at the boundary layer is lower than the temperature Tp of the process medium. With increasing radius the temperature continues to drop with logarithmic law. Hence, the temperature Tpe at radius Rpe on the outer surface of the pipe wall 3 is lower than the temperature Tpi of the boundary layer. Also, the temperature Tpe is higher than the temperature TR1 at the inner surface of the second layer 5 at a radius R1. Further, the temperature TR1 is higher than the temperature TR2 on the outer surface of the second layer at radius R2. Still further, the temperature TR2 is higher than the temperature TR3 on the outer surface of the third layer 6. Consequently the temperature TR3 is higher than the temperature Te of the environment. However, the temperature drop is of course higher in the first and third layer 4, 6 than in the pipe wall 3 and the second layer 5 because of the thermal conductivity of the different layers 3, 4, 5, 6.

Table 1 provides the basic variables used and the units they are measured in.

Table 1:

| |
|---|
| Process Fluid boundary condition internal wall:<br>Tp = external temperature [K]<br>hp = heat transfer convective coefficient [W/m²K] |
| THERMAL CONDUCTIVITY LAYER MEDIA<br>kp = pipe wall [W/mK]<br>k1 = layer 1 [W/mK]<br>k2 = layer 2 [W/mK]<br>k3 = layer 3 [W/mK] |
| External Environment boundary condition external wall:<br>Te = external temperature [K]<br>he = heat transfer convective coefficient [W/m²K] |

The theoretical solution for the thermal resistance of each layer is presented in table 2.

Table 2:

| | |
|---|---|
| INTERNAL WALL (CONDUCTIVE HEAT TRANSFER) | $\dfrac{1}{2\,\pi\,Rpi\,hp}$ |
| PIPE WALL (CONDUCTIVE HEAT TRANSFER) | $\dfrac{\ln(Rpe\,/\,Rpi)}{2\,\pi\,kp}$ |
| LAYER 1 (CONDUCTIVE HEAT TRANSFER) | $\dfrac{\ln(R1\,/\,Rpe)}{2\,\pi\,k1}$ |
| LAYER 2 (CONDUCTIVE HEAT TRANSFER) | $\dfrac{\ln(R2\,/\,R1)}{2\,\pi\,k2}$ |
| LAYER 3 (CONDUCTIVE HEAT TRANSFER) | $\dfrac{\ln(R3\,/\,R2)}{2\,\pi\,k3}$ |

(continued)

| EXTERNAL WALL (CONVECTIVE HEAT TRANSFER) | $\dfrac{1}{2\pi R3\, he}$ |
|---|---|

The theoretical solution for the thermal flux q for the arrangement shown in figure 1a is presented in table 3.

Table 3:

| HEAT FLUX q (per length unit) | Tp - Te |
|---|---|
| $[W/m]\,\pi R3\, he$ | $\dfrac{1}{2\pi Rpi\, hp} + \dfrac{\ln(Rpe/Rpi)}{2\pi kp} + \dfrac{\ln(R1/Rpe)}{2\pi k1} + \dfrac{\ln(R2/R1)}{2\pi k2} + \dfrac{\ln(R3/R2)}{2\pi k3} + \dfrac{1}{2}$ |

The theoretical solution for the temperature profile is presented in table 4.

Table 4:

| | |
|---|---|
| Tpi = Pipe internal wall surface temperature = | $Tp - q\,\dfrac{1}{2\pi Rpi\, hp}$ |
| Tpe = Pipe external wall surface temperature = | $Tpi - q\,\dfrac{\ln(Rpe/Rpi)}{2\pi kp}$ |
| TR1 = External 1° insulation layer temperature = | $Tpe - q\,\dfrac{\ln(R1/Rpe)}{2\pi k1}$ |
| TR2 = External conductive layer surface temperature = | $TR1 - q\,\dfrac{\ln(R2/R1)}{2\pi k2}$ |
| TR3 = External 2° insulation layer surface temperature = | $TR2 - q\,\dfrac{\ln(R3/R2)}{2\pi k3}$ |

The theoretical solution of the theoretical minimum measurement error is presented in table 5.

Table 5:

$$\text{Min Err} = Tp - Tpe = Tp - \left[ Tp - q\left( \frac{1}{2\pi Rpi\, hp} + \frac{\ln(Rpe/Rpi)}{2\pi kp} \right) \right]$$

(continued)

$$\text{Min Err} = q \left[ \frac{1}{2 \pi \, Rpi \, hp} + \frac{\ln(Rpe/Rpi)}{2 \pi \, kp} \right]$$

$$\text{Min Err} = \frac{(Tp - Te) \left[ \dfrac{1}{2 \pi \, Rpi \, hp} + \dfrac{\ln(Rpe/Rpi)}{2 \pi \, kp} \right]}{\dfrac{1}{2 \pi \, Rpi \, hp} + \dfrac{\ln(Rpe/Rpi)}{2 \pi \, kp} + \dfrac{\ln(R1/Rpe)}{2 \pi \, k1} + \dfrac{\ln(R2/R1)}{2 \pi \, k2} + \dfrac{\ln(R3/R2)}{2 \pi \, k3} + \dfrac{1}{2 \pi \, R3 \, he}}$$

Based upon the formulas in tables 1-5 the minimum theoretical error when measuring the surface temperature Tpe, the process fluid temperature Tp can be determined. This minimal error depends on the physical behavior of the system itself and cannot be eliminated. The error however can be reduced based on the proposed invention, e.g. by increasing the thickness of the insulation layers 4, 6 and selecting proper materials. However, the minimum error is related to the application and may, like e.g. the like boundary condition, not be changed. Therefore, for certain applications the overall accuracy may be poor - e.g. when internal heat transfer convective coefficient hp is low or the difference of temperature between the two environments is big.

An arrangement compensating these drawbacks is described in the following based on the embodiment shown in figure 1c.

In order to make the surface temperature measurement device 1 less sensitive to the application conditions, which are present in-situ, and less sensitive to the boundary conditions a measuring device 1 is proposed that is able to heat the intermediate layer, e.g. the thermally conductive layer 5, preferably to the same temperature as the process fluid 2, in order to eliminate or reduce as much as possible the heat flux q in the internal layers 3, 4. Alternatively a temperature above the environment temperature Te can be set und thus the heat flux q through the housing wall, comprising layers 2, 3, 4, may be lowered. This permits thermally insulating the device 1 from the external environment 7 and allows for a high accuracy of the measurement.

Thus the temperature gap between the process fluid 2 inside the pipe and the surface temperature Tpe is reduced and thus the temperature measurement accuracy is improved up to a theoretical negligible minimum error (close to zero). As shown in the temperature profile in figure 1d the temperatures Tp, Tpi, Tpe, TR1 and TR2 are about equal in this case. The temperature measurement may then be completely independent from the boundary conditions. These two important advantages become clearer when analyzing the physical simplified model which describes this application considering the parameters in the formulas already presented in tables 1-5, which were used to describe the minimum theoretical error.

The compensation is obtained by heating an internal layer 5 of the housing as shown in figure 1a and figure 1c to the (approximately) same temperature value as the one of the outer surface of the pipe wall, i.e. temperature Tpe. Heating could be done using an electric heating element 20 which is in thermal contact with a conductive layer 5 in order to achieve a uniform temperature around the pipe wall 3. The temperature Tpe at the outer surface of the pipe wall and the temperature TR1 or TR2 at the conductive layer 5 are measured and a predetermined temperature difference (between Tpe and TR1 or Tpe and TR2 as the case may be) could be reached by means of a temperature controller, like a PID or a thermostat, which e.g. may be integrated in the processing unit 10. The parameter used to drive the system is the difference of temperatures measured by way of the first temperature sensor 8 and the second temperature sensor 9. The processing unit 10 may thus be configured to tune the electrical power delivered to the heating element 20 in order to maintain the temperature difference equal to zero or at another predetermined value.

An external insulation layer 6 may be added to reduce as much as possible the electrical power consumption of the heating element 20 and to avoid high temperatures on the external surface of the layer 6.

According to the embodiment in figure 1c the temperature TR1 and/or TR2 of the second layer 5 now is held on a predetermined temperature by applying power q1 for heating. Table 7 shows the formulas used to describe the surface temperature measuring device 1.

Table 7:

| HEAT FLUX q (per length unit) = qr + qi [W/m] |
| --- |

(continued)

$$\text{COMPENSATION INPUT POWER } qi \text{ (per length unit)} = \cfrac{TR1 - Te}{\cfrac{\ln(R2/R1)}{2\pi k2} + \cfrac{\ln(R3/R2)}{2\pi k3} + \cfrac{1}{2\pi R3\, he}}$$

$$\text{RESIDUAL HEAT FLUX IN THE INNER LAYERS } qr \text{ (per length unit)} = \cfrac{Tpe - TR1}{\cfrac{\ln(R1/Rpe)}{2\pi k1}}$$

Table 8 shows theoretical results for the temperatures in the respective layers 3, 4, 5, 6.

Table 8:

$$Tpi = \text{Pipe internal wall surface temperature} = Tp - qr\,\cfrac{1}{2\pi\, Rpi\, hp}$$

$$Tpe = \text{Pipe external wall surface temperature} = Tpi - qr\,\cfrac{\ln(Rpe/Rpi)}{2\pi\, kp}$$

TR1 = Active layer controlled temperature (it's a fixed value depending only on the control system accuracy, not depending from boundary condition

$$TR2 = \text{External conductive layer surface temperature} = TR1 - q\,\cfrac{\ln(R2/R1)}{2\pi\, k2}$$

$$TR3 = \text{External 2° insulation layer surface temperature} = TR2 - q\,\cfrac{\ln(R3/R2)}{2\pi\, k3}$$

In table 9 the surface temperature minimum theoretical measurement error is presented.

Table 9:

$$\text{Min Err} = Tp - Tpe = Tp - \left[ Tp - qi \left[ \cfrac{1}{2\pi\, Rpi\, hp} + \cfrac{\ln(Rpe/Rpi)}{2\pi\, kp} \right] \right]$$

$$\text{Min Err} = qi \left[ \cfrac{1}{2\pi\, Rpi\, hp} + \cfrac{\ln(Rpe/Rpi)}{2\pi\, kp} \right]$$

$$\text{Min Err} = \cfrac{(Tpe - TR1)\left[ \cfrac{1}{2\pi\, Rpi\, hp} + \cfrac{\ln(Rpe/Rpi)}{2\pi\, kp} \right]}{\cfrac{\ln(R1/Rpe)}{2\pi\, k1}}$$

From the constructive point of view a surface measurement temperature device 1 with a compensation system, comprising a housing with a multi-layered wall and a heating element, could be realized by at least one of the following:

- a mechanical system to clamp the device 1 on the pipe or container wall 3- which mechanical system may be part of a first housing section
- a physical structure in order to realize the insulation layers 4, 6 and the conductive layer 5 (arranged between layers 4, 6) to fix and control the intermediate thermal condition - this physical structure may be part of a second housing section
- a physical structure to install the first and the second temperature sensor - which physical structure is part of the first housing section
- a first and a second temperature sensor, e.g. sensors 8, 9
- a heating element 20 on the second layer 5
- a control system to tune the power provided to the heating element -which control system is e.g. part of a processing unit 10
- an enclosure, such as additional housing 11, to contain and protect the control system and to provide the necessary electrical connection for the power supply and for the pipe surface temperature measurement signal -this processing unit may be a transmitter/transducer which is configured to convert the signal according customer requirements.

The housing 4, 5, 6 could be realized using a casing shell which is designed to be installed on a specific pipe external diameter or to adapt to different diameters within a defined range by using flexible elements.

The multi-layer design allows improving the following functionality of the system:

1) A good external insulation layer, i.e. third layer 6, permits to reduce the input power necessary for the compensation effect in order to improve energy efficiency of the device 1 and a secondary effect is to reduce the surface temperature of the device for safety reasons.

2) A good internal insulation, i.e. first layer 4, makes the device 1 less sensitive to boundary conditions and permits to reduce the measurement error even if the compensation is not perfect and the temperature in the controlled layer, i.e. second layer 5, is not exactly the same of the process temperature Tp.

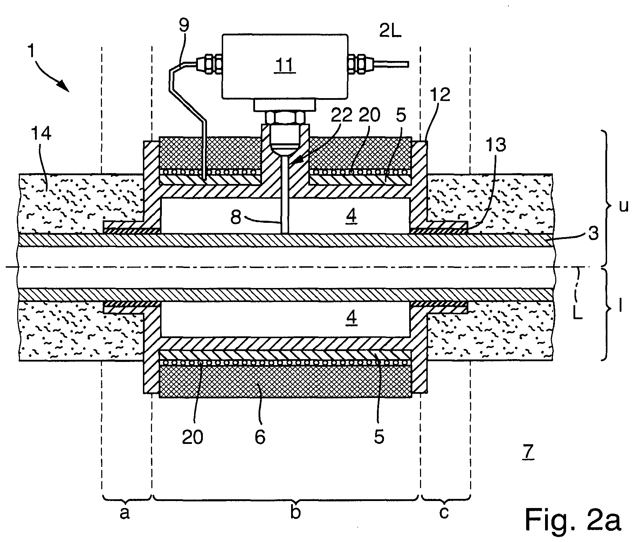

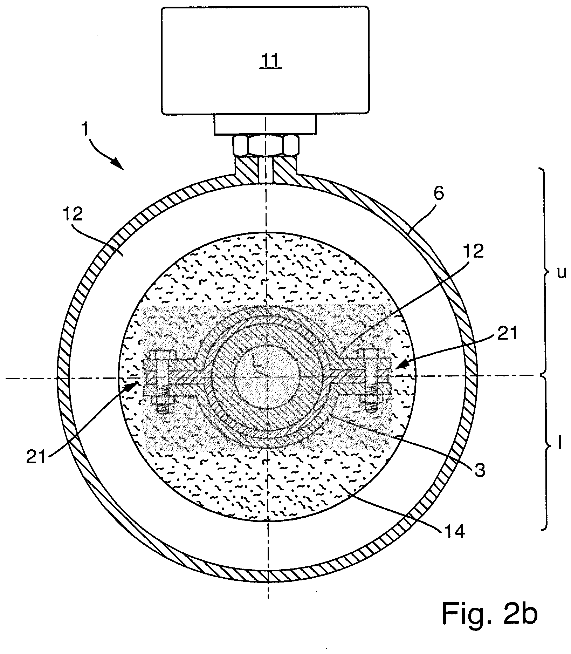

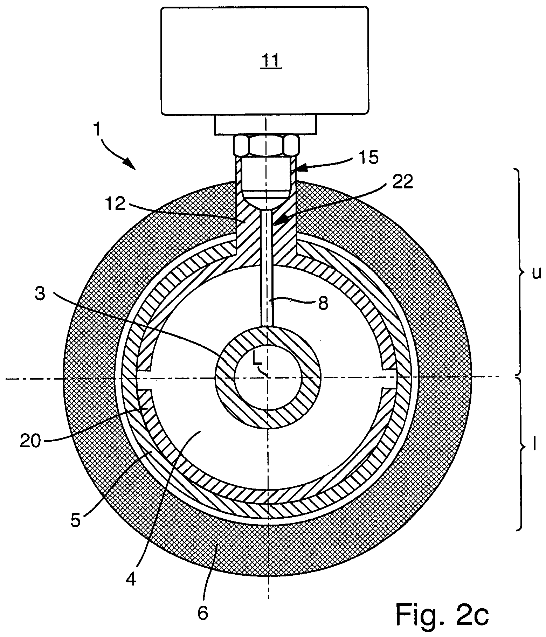

A supporting structure 12 for the housing wall layers 3, 4, 5 can be manufactured in an easy way by e.g. molding. An embodiment showing such a supporting structure is shown in figure 2a. Figure 2 a shows a longitudinal cross-section through the longitudinal axis L of the surface temperature measuring device 1. In figure 2b a transversal cross-sectional view at plane A-A is shown. In figure 2c transversal cross-sectional view at plane B-B is shown.

In figure 2a the housing has a first and second attachment region also called first and third housing section. By way of the attachment regions the housing is attached to the pipe wall 3. The fastening of the housing to the pipe wall may be achieved by way of a mechanical clamp. The housing comprises a supporting structure 12 which comprises a first and a second shoulder between which the second housing section is arranged. In this second section the supporting structure 12 serves for supporting the second layer 5 and the third layer 6. Also the supporting structure 12 forms a recess which allows forming a closed cavity which circumferentially surrounds the pipe wall 3 when the housing is attached to the pipe wall 3. This closed cavity forms a first layer 4, which acts as a thermally insulating layer. The support structure also comprises a passage in which a measuring insert 8 may be inserted an arranged preferably perpendicular to the longitudinal axis L of the pipe. A thread may be provided to mechanically pre-load the insert 8 such that the tip is in contact with the pipe wall 3.

A second temperature sensor 9 having a sensor element arranged in thermal contact with the second layer 5 is provided. The sensor signal of the second sensor is coupled to the control unit in additional housing 11. This additional housing is connected to a power source via cables 2L. These cables may also serve for transmitting a signal representing the surface temperature measured to a superordinated unit controlling the process in a plant. The insert 8 may be inserted in the passage 22 through this housing which is connected to the first housing having said the multi-layered housing wall.

The supporting structure 12 may also form another intermediate layer as shown in figure 2a between the closed cavity forming the first layer- and the second layer. Also the supporting structure may serve as support for third layer 6 which forms the outer shell of the housing which is contact with the environment 7.

In figure 2b the fastening mechanism 21 for attaching the device 1 to the pipe wall is shown in more detail. Set screws, as shown, may be employed to connect the housing to the pipe wall 3. The housing may consist of two parts which are secured to each other by way of the fastening mechanism. Another type as the one shown may however be employed to attach the housing to the pipe wall 3.

In figure 2c a cross-section in the plane B-B is shown. As already mentioned the housing may consist of an upper and lower part or upper and lower half u, I i.e. have a two part or have-shell form. These two parts u, I may be secured to each other and to the pipe wall 3, e.g. via the first section of the housing, and thereby form said closed cavity 4.

Another benefit of the present invention is a more compact device 1 since insulation with a gas or a porous material is thin (the thermal conductivity of a gas is 100 times less than a solid material) and installation space can be reduced.

**Claims**

1.  A surface temperature measuring device (1) comprising:

    a housing having a first section (a), preferably at its respective ends, for fastening the housing to a container wall (3), e.g. a pipe,
    said housing having a second section (b) with a first layer acting as a thermally insulating layer, and forming a closed cavity (4) when said housing is attached to said container wall (3), the closed cavity being filled with a gas or a solid,
    and a passage (22) in said second section (b) for inserting a rod shaped measuring insert (8) in said cavity, wherein
    said second section (b) of said housing comprises a first annular member (5) being, preferably radially, displaced from said container wall (3) when attached to said container wall (3), said first annular member (5) being a thermally conductive second layer, and
    said first annular member (5) is circumferentially surrounded by a heating element (20).

2.  A surface temperature measuring device (1) according to the preceding claim,
    wherein said passage (22) is configured to receive said rod shaped measuring insert (8) and to arrange the insert (8) in an angle perpendicular to the longitudinal axis (L) of said container wall (3), preferably perpendicular to the longitudinal axis (L) of a pipe.

3.  A surface temperature measuring device (1) according to one of the preceding claims,
    wherein said second section (b) is covered by an insulation layer (6), which serves for thermally insulating the device (1), especially said cavity (4).

4.  A surface temperature measuring device (1) according to one of the preceding claims,
    wherein a temperature sensor (9) is arranged between said annular member (5) and said heating element (20).

5.  A surface temperature measuring device (1) according to claim 4, comprising a processing unit (10) for controlling said heating element (20) and for receiving a sensor signal of said measuring insert (8) and a sensor signal of said temperature sensor (9).

6.  A surface temperature measuring device (1) according to claim 5, wherein said processing unit (10) is arranged in an additional housing (11), which is attached to said housing.

7.  A surface temperature measuring device (1) according to one of the preceding claims,
    wherein said measuring device possesses an upper (u) and a lower half (I) which are connectable to each other and to the container wall (3), in order to form said device.

8.  A method for measuring a surface temperature of a container wall (3) using a surface temperature measuring device (1) as claimed in one of claims 4-7, comprising the steps of:

    Determining a temperature (Tpe) by way of a first temperature sensor (8) at a first distance (Rpe) from said container wall (3), said first temperature sensor being included in said rod shaped measuring insert, and
    Determining a temperature (TR1) by way of a second temperature sensor (9) at a second distance (R1) from said container wall (3), said second temperature sensor (9) being said temperature sensor arranged between said annular member (5) and said heating element (20), and
    Controlling a heating element (20) such that a temperature difference (Tpe-TR1) measured between the first and the second sensor (8, 9) is reduced, and preferably eliminated.

**9.** A method according to the preceding claim:

wherein based upon said container wall temperature (Tpe) a temperature (Tp) of the process fluid (2) inside said container (3) is determined.

**10.** A method according to the preceding claim:

wherein the heating element (20) is heated to a temperature higher than the temperature in the environment (7) of said container wall (2) -and thus the temperature gap between the process fluid (2) and the environment (7) is reduced.


**Patentansprüche**

**1.** Eine Oberflächentemperaturmesseinrichtung (1), umfassend:

ein Gehäuse mit einem ersten Abschnitt (a), vorzugsweise an den jeweiligen Enden, für die Befestigung des Gehäuses an einer Behälterwand (3), z. B. eines Rohrs, und einen zweiten Abschnitt (b) in besagtem Gehäuse mit einer ersten Schicht, die als eine thermisch isolierende Schicht fungiert und,
unter Bildung eines geschlossenen Hohlraums (4), wenn besagtes Gehäuse an besagter Behälterwand (3) befestigt ist, wobei der geschlossene Hohlraum mit einem Gas oder einem Feststoff gefüllt ist,
und einen Durchlass (22) in besagtem zweiten Abschnitt (b) für den Einsatz eines stabförmigen Messeinsatzes (8) in besagtem Hohlraum, wobei
besagter zweiter Abschnitt (b) besagten Gehäuses ein erstes Ringelement (5) umfasst, das, vorzugsweise radial, von besagter Behälterwand (3) versetzt ist, wenn es an besagter Behälterwand (3) befestigt ist, und
besagtes erstes Ringelement (5) eine thermisch leitfähige zweite Schicht ist, und
besagtes erstes Ringelement (5) umfänglich von einem Heizelement (20) umgeben ist.

**2.** Eine Oberflächentemperaturmesseinrichtung (1) nach dem vorhergehenden Anspruch, wobei besagter Durchlass (22) zur Aufnahme besagten stabförmigen Messeinsatzes (8) und zur Anordnung des Einsatzes (8) in einem Winkel senkrecht zur Längsachse (L) besagter Behälterwand (3), vorzugsweise senkrecht zur Längsachse (L) eines Rohrs, konfiguriert ist.

**3.** Eine Oberflächenmesseinrichtung (1) nach einem der vorhergehenden Ansprüche,
wobei besagter zweiter Abschnitt (b) von einer Isolierschicht (6) bedeckt ist, die zur thermischen Isolierung der Einrichtung (1), insbesondere besagten Hohlraums (4), dient.

**4.** Eine Oberflächenmesseinrichtung (1) nach einem der vorhergehenden Ansprüche,
wobei ein Temperatursensor (9) zwischen besagtem Ringelement (5) und besagtem Heizelement (20) angeordnet ist.

**5.** Eine Oberflächentemperaturmesseinrichtung (1) nach Anspruch 2,
umfassend eine Verarbeitungseinheit (10) für die Kontrolle besagen Heizelements (20) und für den Empfang eines Sensorsignals besagten Messeinsatzes (8) und eines Sensorsignals besagten Temperatursensors (9).

**6.** Eine Oberflächentemperaturmesseinrichtung (1) nach Anspruch 5,
wobei besagte Verarbeitungseinheit (10) in einem zusätzlichen Gehäuse (11) angeordnet ist, das an besagtem Gehäuse befestigt ist.

**7.** Eine Oberflächentemperaturmesseinrichtung (1) nach einem der vorhergehenden Ansprüche,
wobei besagte Messeinrichtung eine obere (u) und eine untere Hälfte (l) umfasst, die miteinander und mit der Behälterwand (3) verbindbar sind, um besagte Einrichtung zu formen.

**8.** Ein Verfahren zum Messen einer Oberflächentemperatur einer Behälterwand (3) mittels einer Oberflächentemperaturmesseinrichtung (1), wie in einem der Ansprüche 4 - 7 beansprucht,
umfassend folgende Schritte:

Ermittlung einer Temperatur (Tpe) über einen ersten Temperatursensor (8) bei einer ersten Distanz (Rpe) von besagter Behälterwand (3), wobei besagter erster Temperatursensor in besagtem stabförmigen Messeinsatz integriert ist, und

Ermittlung einer Temperatur (TR1) über einen zweiten Temperatursensor (9) bei einer zweiten Distanz (R1) von besagter Behälterwand (3), wobei besagter zweiter Temperatursensor (9) der besagte Temperatursensor ist, der zwischen besagtem Ringelement (5) und besagtem Heizelement (20) angeordnet ist, und

Kontrolle eines Heizelements (20) derart, dass eine zwischen dem ersten und dem zweiten Sensor (8, 9) gemessene Temperaturdifferenz (Tpe-TR1) vermindert, und vorzugsweise beseitigt, wird.

9. Ein Verfahren nach dem vorhergehenden Anspruch,
wobei basierend auf besagter Behälterwandtemperatur (Tpe) eine Temperatur (Tp) des Prozessmessstoffes (2) in besagtem Behälter (3) ermittelt wird.

10. Ein Verfahren nach dem vorhergehenden Anspruch,
wobei das Heizelement (20) auf eine Temperatur höher als die Temperatur in der Umgebung (7) besagter Behälterwand (2) erwärmt wird - und somit der Temperaturunterschied zwischen dem Prozessmessstoff (2) und der Umgebung (7) vermindert wird.


**Revendications**

1. Dispositif de mesure de la température de surface (1) comprenant :

un boîtier doté d'une première section (a), de préférence à ses extrémités respectives, pour la fixation du boîtier à une paroi de réservoir (3), p. ex. un tube, le boîtier comprenant une deuxième section (b) avec une première couche agissant en tant que couche d'isolation thermique, et
formant une cavité fermée (4) lorsque le boîtier est fixé à la paroi de réservoir (3), la cavité fermée étant remplie d'un gaz ou d'un solide,
et un passage (22) dans la deuxième section (b) pour l'insertion d'un élément de mesure en forme de tige (8) dans la cavité,
la deuxième section (b) du boîtier comprenant un premier membre annulaire (5), déplacé, de préférence radialement, de la paroi de réservoir (3) lors de la fixation à la paroi de réservoir (3), le premier membre annulaire (5) constituant une deuxième couche thermoconductrice, et
le premier membre annulaire (5) étant entouré sur sa circonférence par un élément de chauffage (20).

2. Dispositif de mesure de la température de surface (1) selon la revendication précédente,
pour lequel le passage (22) est configuré de telle sorte à recevoir l'élément de mesure en forme de tige (8) et à disposer l'élément (8) dans un angle perpendiculaire à l'axe longitudinal (L) de la paroi de réservoir (3), de préférence perpendiculaire à l'axe longitudinal (L) d'un tube.

3. Dispositif de mesure de la température de surface (1) selon l'une des revendications précédentes,
pour lequel la deuxième section (b) est couverte par une couche isolante (6), qui sert d'isolation thermique de l'appareil (1), notamment de la cavité (4).

4. Dispositif de mesure de la température de surface (1) selon l'une des revendications précédentes,
pour lequel un capteur de température (9) est disposé entre le membre annulaire (5) et l'élément de chauffage (20).

5. Dispositif de mesure de la température de surface (1) selon la revendication 4, comprenant une unité de traitement (10) pour la commande de l'élément de chauffage (20) et pour la réception d'un signal de capteur de l'élément de mesure (8) et d'un signal du capteur de température (9).

6. Dispositif de mesure de la température de surface (1) selon la revendication 5, pour lequel l'unité de traitement (10) est disposée dans un boîtier additionnel (11), qui est fixé au boîtier.

7. Dispositif de mesure de la température de surface (1) selon l'une des revendications précédentes,
pour lequel l'appareil de mesure possède une moitié supérieure (u) et une moitié inférieure (l), qui sont connectables l'une à l'autre et à la paroi de réservoir (3), afin de former l'appareil.

8. Méthode destinée à la mesure d'une température de surface d'une paroi de réservoir (3) utilisant un dispositif de mesure de la température de surface (1) selon l'une des revendications 4 à 7, comprenant les étapes suivantes :

Détermination d'une température (Tpe) au moyen d'un premier capteur de température (8) à une première distance (Rpe) de la paroi de réservoir (3), le premier capteur de température étant inclus dans l'élément de mesure en forme de tige et

Détermination d'une température (TR1) au moyen d'un deuxième capteur de température (9) à une deuxième distance (R1) de la paroi de réservoir (3), le deuxième capteur de température (9) étant le capteur de température disposé entre le membre annulaire (5) et l'élément de chauffage (20), et

Commande d'un élément de chauffage (20) de telle sorte qu'une différence de température (Tpe-TR1) mesurée entre le premier et le deuxième capteurs (8, 9) est réduite, et de préférence éliminée.

9. Méthode selon la revendication précédente,
pour laquelle une température (Tp) du fluide de process (2) à l'intérieur du réservoir (3) est déterminée sur la base de la température de paroi de réservoir (Tpe).

10. Méthode selon la revendication précédente,
pour laquelle l'élément de chauffage (20) est chauffé à une température supérieure à la température régnant dans l'environnement (7) de la paroi de réservoir (3) - et, en conséquence, l'écart de température entre le fluide de process (2) et l'environnement (7) est réduit.

Fig. 1a

Fig. 1b

Fig. 1c

Temperatur

$T_p \approx T_{pi} \approx T_{pe} \approx T_{R1}$
$\approx T_{R1}$

$T_{R3}$

$T_e$

$R_{pi} R_{pe} \; R_1 R_2 \qquad R_3$ \qquad Radius

Fig. 1d

Fig. 2a

Fig. 2b

Fig. 2c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020064206 A1
- DE 1573324
- US 3321974 A
- US 3720103 A
- WO 9850766 A
- DE 3230124
- US 4968151 A
- DE 3527942
- CN 203758647 U
- US 4527908 A
- EP 2151673 A2